# EUROPÄISCHE PATENTSCHRIFT

(11) **EP 1 671 873 B1**
(45) Veröffentlichungstag und Bekanntmachung des Hinweises auf die Patenterteilung: **20.01.2010**
(21) Anmeldenummer: 05023913.6
(22) Anmeldetag: 03.11.2005
(51) Int. Cl.: B62D 33/037, E05B 65/16, E05B 65/20

(54) **Einrichtung zum lösbaren Festlegen eines gegenüber einem Halteelement schwenkbar gelagerten Bauteiles**
Device for releasably fastening a structure which is pivotably mounted relative to a support element
Dispositif de verrouillage réversible pour un élément pivotant relativement à une structure de support

(30) Priorität: 16.12.2004 DE 102004060560
(43) Veröffentlichungstag der Anmeldung: 21.06.2006
(73) Patentinhaber: F. HESTERBERG & SÖHNE GmbH & Co. KG, 58256 Ennepetal (DE)
(72) Erfinder: Feinbier, Joachim, 58256 Ennepetal (DE)
(74) Vertreter: Christophersen, Ulrich Rudolf

(56) Entgegenhaltungen:
- EP-A- 0 571 665
- DE-A1- 10 039 506
- DE-U1- 8 911 299
- GB-A- 616 993

## Beschreibung

Die Erfindung betrifft eine Einrichtung zum lösbaren Festlegen eines gegenüber einem Halteelement relativ bewegbaren Bauteiles, insbesondere einer Bordwand eines Nutzfahrzeugaufbau, wobei das Halteelement im Festlegungsbereich des Bauteiles (4,13) am Halteelement (8,12) über ein Verriegelungselement verfügt und bauteilseitig mindestens ein entsprechendes Gegenprofil vorgesehen ist, welches durch vertikale Verschiebung eines mit dem Gegenprofil in Wirkverbindung stehenden Verschlusselementes in den Bereich des mit dem Verriegelungselement versehenen Halteelementes einbringbar sowie daraus entfernbar ist.

Die DE 298 07 739 U1 offenbart eine Handhabe eines Verschlusses für Türen, Klappen oder dergleichen von Nutzfahrzeugaufbauten, die um eine Achse schwenkbar und in zwei Teile unterteilt sind, welche durch eine parallel zur Schwenkachse verlaufende Achse gelenkig miteinander verbunden sind, wobei der der Schwenkachse benachbarte Teil der Handhabe mittels einer durch eine Feder beaufschlagte Einrastvorrichtung an einem Gegenhalter verriegelbar ist und wobei der äußere Teil der Handhabe derart mit der Einrastvorrichtung verbunden ist, dass durch Verschwenken des äußeren Teils gegenüber dem inneren Teil der Handhabe die Einrastvorrichtung ausrastbar ist. Die durch eine Feder beaufschlagte Einrastvorrichtung besteht aus einem Schieber, der in einen Haken am Gegenhalter einrastbar ist, wobei die Schwenkachse die Drehstange eines Drehstangenverschlusses ist.

Durch die EP 0 685 545 A ist ein Bordwandverschluss bekannt geworden, der gebildet wird durch eine Basis, die in eine Ladebehälterwand oder dergleichen eingearbeitet oder befestigt wird, wobei in dieser Basis eine verschwenkbare Verschlussklappe vorgesehen ist, die mit einem Riegel verbunden ist, dessen freies Ende mit einem Anschlag auf einer anliegenden Wand zusammenwirken kann und wobei zwischen der Basis und der Verschlussklappe ein Riegel mit Anschlag vorgesehen ist. Zwischen der Basis und der Verschlussklappe ist ein zweiter elastisch verformbarer Riegel mit Anschlag vorgesehen.

Aus der gattungsgemäßen EP 0 571 665 A1 ist ein über die Arretierung der Runge eines Nutzfahrzeugaufbaus erzielbarer Bordwandverschluss mit den eingangs angegebenen Merkmalen bekannt. Zur Arretierung der Runge ist am Fahrzeugaufbau in Höhe des Ladebodens ein Halteelement mit einem daran ausgebildeten Verriegelungselement befestigt. In dem Profil der Runge ist ein hinsichtlich seiner Kontur dem Verriegelungselement entsprechendes Verschlusselement angeordnet und in Profillängsrichtung beweglich gelagert. Der Antrieb des Verschlusselements erfolgt über einen in die Runge integrierten, mittels eins Schwenkhebels betätigbaren Kniehebelmechanismus. Unter Einsatz dieses Mechanismus ist das Verschlusselement in das starr am Fahrzeugaufbau angeordnete Halteelement einbringbar sowie daraus entfernbar.

Die durch den Stand der Technik bekannten Verschlusseinrichtungen weisen eine Vielzahl von Bauteilen auf, wobei der Fertigungs- und Montageaufwand als hoch angesehen wird.

Ziel des Erfindungsgegenstandes ist es, eine Einrichtung zum lösbaren Festlegen eines gegenüber einem Tragkörper schwenkbar gelagerten Bauteiles bereitzustellen, die gegenüber dem Stand der Technik einfacher baut und leichter zu handhaben ist.

Erreicht wird dieses Ziel durch eine Einrichtung zum lösbaren Festlegen eines gegenüber einem Halteelement relativ bewegbaren Bauteiles mit den Merkmalen der beiden nebengeordneten Patentansprüche 1 und 2.

Vorteilhafte Weiterbildungen sind den Unteransprüchen zu entnehmen.

Gegenüber dem Stand der Technik wird nun eine Einrichtung zum lösbaren Festlegen eines gegenüber einem Halteelement schwenkbar gelagerten Bauteiles bereitgestellt, die nur einen geringen Bauteilaufwand mit sich bringt, demzufolge einfach zu montieren und zu bedienen sowie preiswert in der Herstellung ist.

In seiner einfachsten Bauform beinhaltet die erfindungsgemäße Einrichtung ein mit einem Handeingriffsprofll versehenes Verschlusselement, das vorteilhafterweise das Gegenprofil beinhaltet und durch eine Bedienperson in arretierender bzw. entriegelnder Weise vertikal und parallel zum Verriegelungselement verschoben werden kann.

Alternativ können auch andersartige mechanische Antriebe, wie beispielsweise ein an sich bekannter Kniehebel, verwendet werden, die das Verschlusselement in arretierender bzw. entriegelnder Weise betätigt.

Der Erfindungsgegenstand ist vorteilhafterweise anwendbar bei Bordwänden eines Nutzfahrzeugaufbaus, Hecktüren von Fahrzeugen, wie Lkw, deren Anhängern oder dergleichen. Ist der Erfindungsgegenstand im Bereich mindestens einer Bordwand eines Nutzfahrzeugaufbaus vorgesehen, kann selbiger bedarfsweise mit oder ohne Rungen ausgebildet werden, wodurch der Anwendungsbereich der erfindungsgemäßen Einrichtung noch erhöht wird.

Soll der Erfindungsgegenstand im Bereich einer durch mindestens ein verschwenkbares Element gebildeten Hecktür, beispielsweise für einen Nutzfahrzeugaufbau, zum Einsatz gelangen, kann dies in analoger Weise mit oder ohne Rungen realisiert werden, wobei der Fachmann die geeignete Auswahl vornehmen wird.

Der Erfindungsgegenstand ist anhand eines Ausführungsbeispieles in der Zeichnung dargestellt und wird wie folgt beschrieben. Es zeigen:
- Figur 1: Prinzipskizze einer gegenüber einem Rahmen, respektive mindestens einer Bordwand relativ bewegbar vorgesehenen Bordwand eines Nutzfahrzeugaufbaus, zumindest beinhaltend eine Mittelrunge sowie vergrößerte Darstellung des Festlegebereiches der schwenkbaren Bordwand;
- Figur 2: Prinzipskizze einer Bordwand mit rungenloser Eckbefestigung in verschiedenen Ansichten bzw. Schnitten;
- Figur 3: Darstellung eines Bordwandverschlusses in verschiedenen Ansichten bzw. Schnitten;
- Figur 4: Alternativer Bordwandverschluss in verschiedenen Ansichten bzw. Schnitten;
- Figur 5: Einzelteildarstellung eines Verriegelungselementes in verschiedenen Ansichten;
- Figur 6: Einzelteildarstellung eines Einfassprofils für eine Bordwand in verschiedenen Ansichten und Schnitten;
- Figur 7: Einzelteildarstellung des Verschlusselementes in verschiedenen Ansichten bzw. Schnitten.
- Figur 8: Prinzipskizze eines Hecktürbereiches eines Fahrzeuges

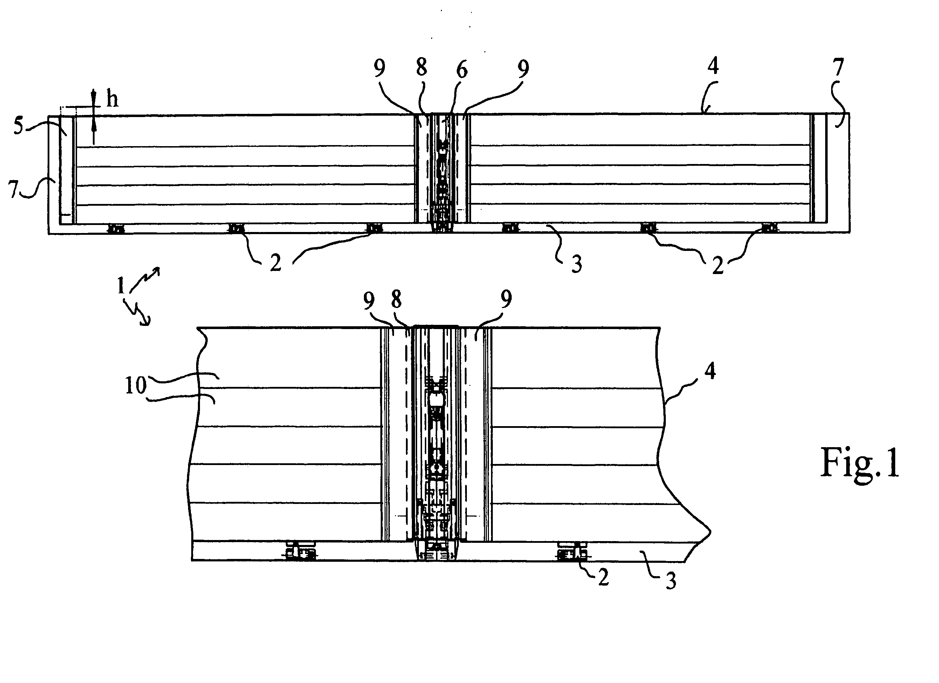

Figur 1 zeigt als Prinzipskizze einen Nutzfahrzeugaufbau 1, beinhaltend eine über Scharniere 2 mit einem Rahmen 3 verbundene Bordwand 4 (schwenkbares Bauteil). Einrichtungen zum lösbaren/arretierten Festlegen der Bordwand 4 gegenüber einem Halteelement sind mit den Bezugszeichen 5 und 6 versehen, wobei eine vorgebbare Hubhöhe h für die erfindungsgemäße Einrichtung 5,6 angedeutet ist. Der Nutzfahrzeugaufbau 1 verfügt in diesem Beispiel über Eckrungen 7 und eine Mittelrunge 8. Im Bereich der Mittelrunge 8 sind Bordwandeinfassungen 9 zur Aufnahme einer entsprechenden Anzahl von Bordwandprofilen 10 vorgesehen. Die erfindungsgemäße Einrichtung 5 bzw. 6 wird in den folgenden Figuren näher erläutert.

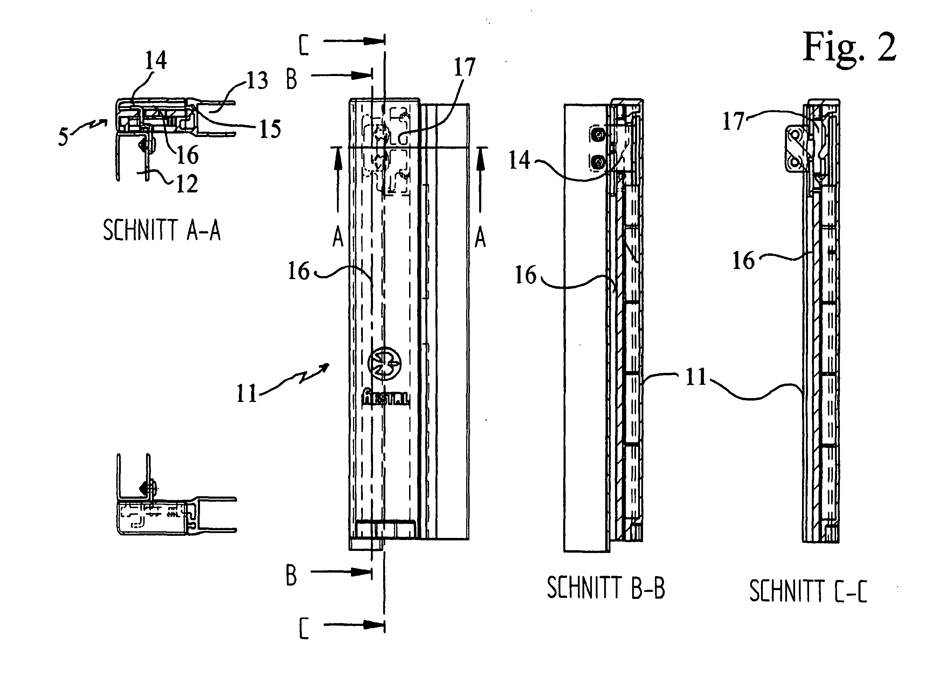

Figur 2 zeigt als Prinzipskizze Teile eines rungenlosen Nutzfahrzeugaufbaus 1 in Verbindung mit einer zugehörigen Verriegelungseinrichtung 5. Erkennbar sind zwei Bordwandbereiche 12,13, wobei in diesem Beispiel der Bordwandbereich 13 relativ zum Bordwandbereich 12 bewegbar sein soll. Der Bordwandbereich 12 bildet hierbei das Halteelement, das in diesem Beispiel als stationäre Bordwand (nicht dargestellt) ausgebildet wird. Im Eckbereich ist im Bordwandbereich 12 ein Verriegelungselement 14 vorgesehen, das in diesem Beispiel einen Z-förmigen Querschnitt aufweist und mit dem Eckwandbereich 12 beispielsweise durch Nieten oder Schrauben verbunden ist. Die Verriegelungseinrichtung 5 beinhaltet ein Verschlusselement 11, das innerhalb einer Führung 15 im Bereich des bewegbaren Bordwandelementes 13 manuell in vertikaler Richtung auf und ab verschiebbar ist. Das Verschlusselement 11 wirkt mit einem Gegenprofil 16 zusammen, das im Bereich des Verriegelungselementes 14 mit einem entsprechend gestalteten Ausschnitt 17 versehen ist, in welchen das Verriegelungselement 14 einführbar ist, sobald sich das Verriegelungselement 14 und der Ausschnitt 17 gegenüberliegen. In diesem Fall ist das, das Gegenprofil 16 beinhaltende Verschlusselement 11 in angehobener Position versehen. Durch Einführen des Verriegelungselementes 14 in den Ausschnitt 17 und Absenken des Verschlusselementes 11 findet eine Verriegelung zwischen dem Verriegelungselement 14 und dem Gegenprofil 16 statt, so dass die Bordwandbereiche 12,13 arretiert und zueinander festgelegt sind. Durch erneutes Anheben des Verschlusselementes 11' kann dieser festgelegte Zustand rückgängig gemacht werden.

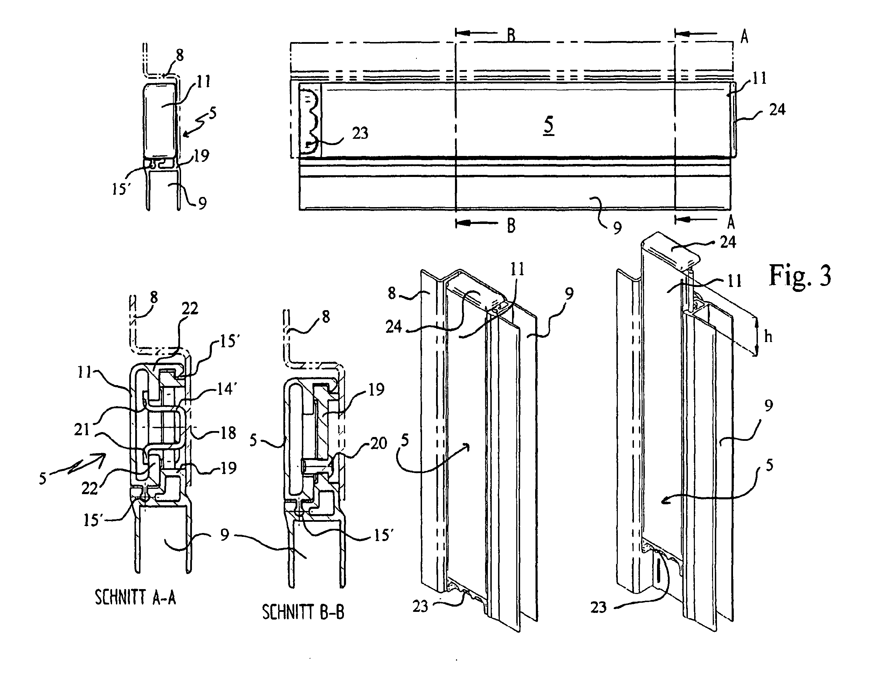

Figur 3 zeigt die Ausgestaltung eines Verschlusselementes 11 in verschiedenen Ansichten und Schnitten. In diesem Beispiel soll ein Zustand gegeben sein, wie er in Figur 1 angesprochen ist, nämlich, dass eine Runge 8 vorgesehen ist.

Ebenfalls dargestellt ist die Bordwandeinfassung 9, hier jedoch nicht mit der Einrichtung 5, sondern mit der Einrichtung 6 versehen. Im Bereich der Runge 8 ist ein in diesem Beispiel hutförmig ausgebildetes Verriegelungselement 14' vorgesehen, das im Bereich 18 mit der Runge 8 verbunden ist. Die Bordwandeinfassung 9 wirkt mit einem Profilkörper 19 zusammen, der eine Führung 15' aufweist, innerhalb derer die als Verschlusselement 11 ausgebildete Einrichtung 6 dergestalt geführt ist, dass sie in vertikaler Richtung angehoben bzw. abgesenkt werden kann. Zur Begrenzung des Hubes h ist profilkörperseitig ein Hubbegrenzungselement 20 vorgesehen. In arretiertem Zustand liegen die hutartigen Ansätze 21 des Verriegelungselementes 14' hinter entsprechend ausgestalteten Gegenprofilen 22 des Verschlusselementes 11, was in den folgenden Detailzeichnungen noch näher erläutert wird. Das Verschlusselement 11 soll in diesem Beispiel durch ein Aluminiumstrangpressprofil gebildet sein, das in seinem unteren Bereich mit einem Handeingriffselement 23 versehen und in seinem oberen Bereich durch ein Abdeckelement 24 verschlossen ist. Alternativ kann das Verschlusselement 11 als Kunststoffprofil ausgebildet werden, wobei das Handeingriffselement 23 und das Abdeckelement 24 darin integriert sind.

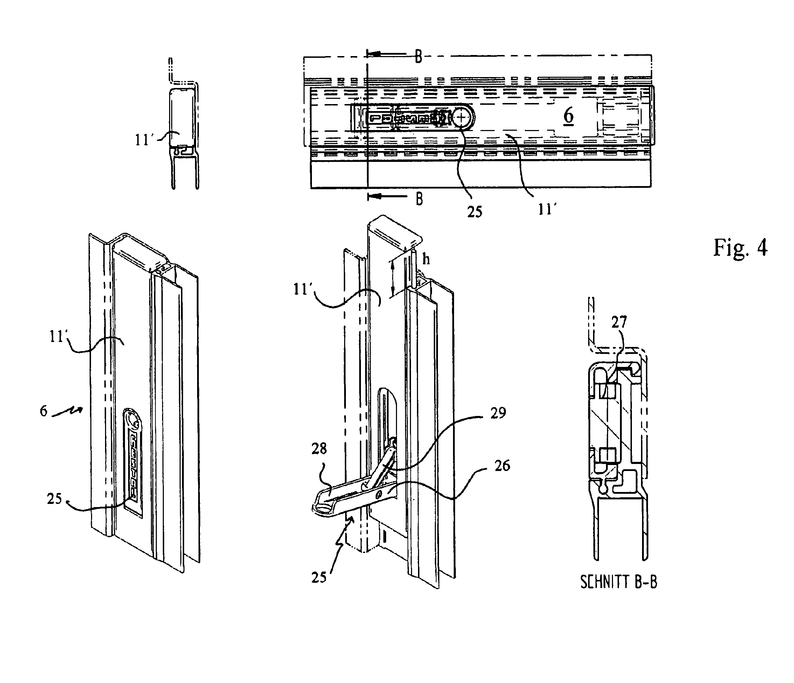

Figur 4 zeigt einen alternativen Bordwandverschluss 6 in verschiedenen Ansichten und Schnitten. Die wesentlichen Elemente sind analog zu Figur 3 aufgebaut, wobei die Betätigung des Verschlusselementes 11' in diesem Beispiel über einen Kniehebel 25 herbeiführbar ist, beinhaltend ein erstes Kniehebelglied 26, das um eine Drehachse 27 schwenkbar ist und in einen Handhebel 28 ausläuft sowie ein zweites Kniehebelglied 29, das mit dem Verschlusselement 11 in Wirkverbindung steht und selbiges betätigt.

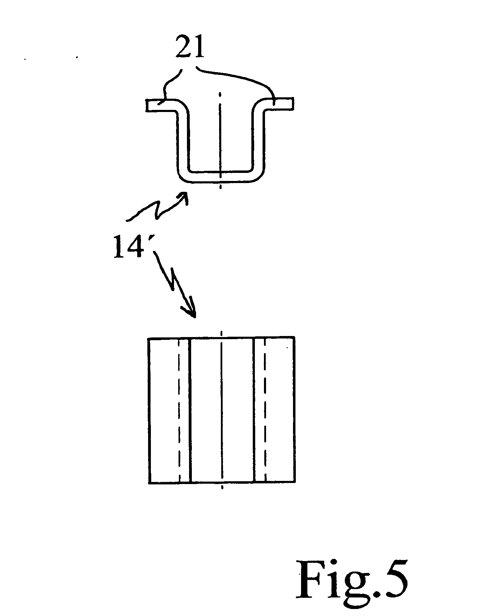

Figur 5 zeigt als Einzelteildarstellung in verschiedenen Ansichten das Verriegelungselement 14', das einen hutförmigen Querschnitt aufweist und über die in Figur 3 dargestellten Ansätze 21 verfügt. Das Verriegelungselement 14' ist in diesem Beispiel schienenartig, d.h. mit vorgebbarer Länge, ausgebildet.

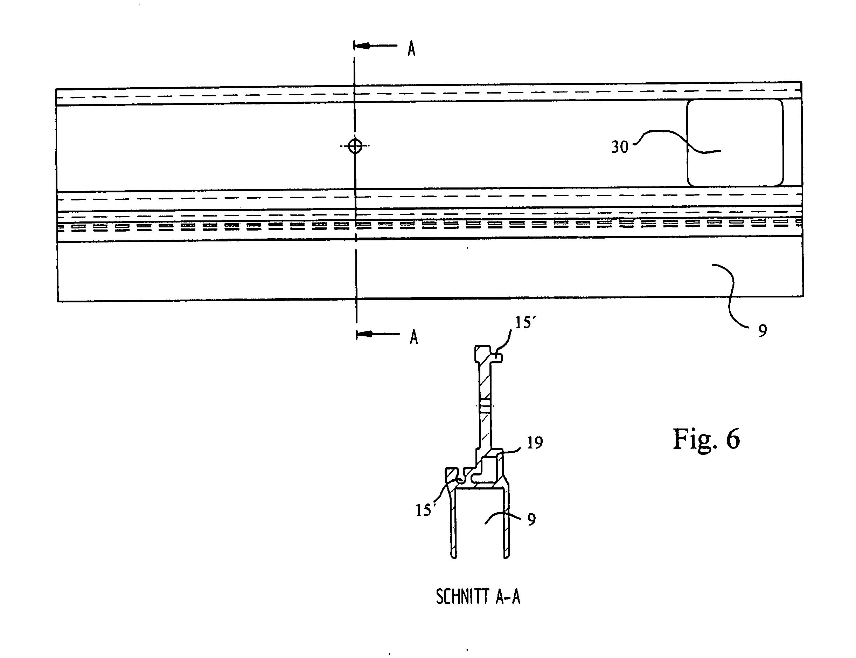

Figur 6 zeigt als Einzeldarstellung die Bordwandeinfassung 9, beinhaltend die Führung 15' sowie den Profilkörper 19. Im oberen Bereich weist die Bordwandeinfassung 9 profilkörperseitig einen Ausschnitt 30 auf, durch welche das hier nicht dargestellte Verriegelungselement 14' führbar ist.

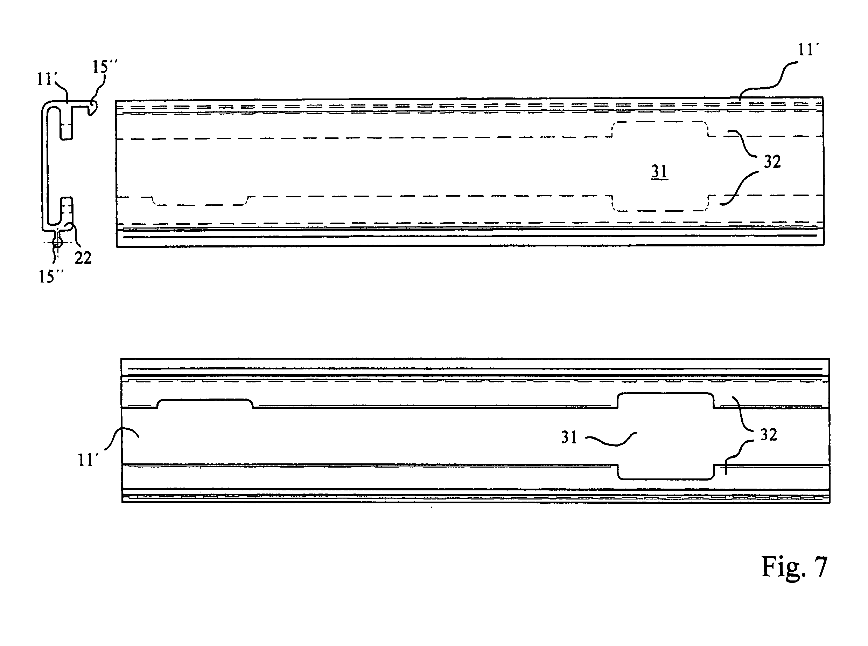

Figur 7 zeigt als Einzelteildarstellung das Verschlusselement 11', das in diesem Beispiel durch ein Aluminium-Strangpressprofil gebildet ist. Erkennbar ist der Ansatz 15", der im Bereich der Führung 15' (Figur 6) eingebracht ist. Ferner erkennbar ist ein Ausschnitt 31 als Gegenprofil, durch welchen im zu verriegelnden Zustand das Verriegelungselement 14' hindurchtritt, sobald es gegenüber dem Ausschnitt 31 positioniert ist. Durch Absenken des Verschlusselementes 11' greifen die Ansätze 21 des Verriegelungselementes 14' hinter die Flächenbereiche 32 des Verschlusselementes 11 wodurch die Arretierung erfolgt ist.

Je nach Höhe der Bordwände kann es sinnvoll sein, mehrere Verriegelungselemente 14,14' übereinander vorzusehen, wobei dann das Gegenprofil 31,32 des Verschlusselementes 11, 11', respektive des Profilkörpers 19, in entsprechender Weise ausgebildet werden muss.

Soll die Verriegelung einer, beispielsweise aus zwei Elementen bestehenden Hecktür eines Lkw oder eines Anhängers unter Verwendung der erfindungsgemäßen Einrichtungen 5 und/oder 6 verriegelt bzw. entriegelt werden, können im wesentlichen gleiche Bauteile zum Einsatz gelangen, wie sie in den vorangegangenen Figuren beschrieben wurden.

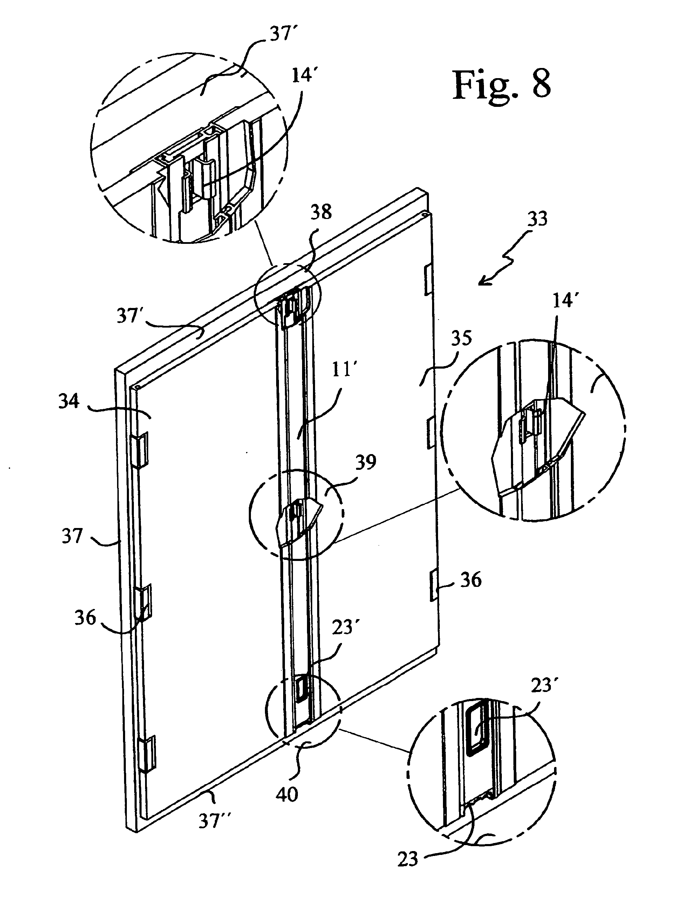

Figur 8 zeigt als Prinzipskizze einen Hecktürbereich 33 eines nicht weiter dargestellten Fahrzeugaufbaus. Erkennbar sind zwei Türflügel 34,35, die über Scharniere 36 mit dem Rahmen 37 des Fahrzeugaufbaus schwenkbar verbunden sind. Der Verschluss für die Türflügel 34,35 findet unter Anwendung gleichartiger Profile in Analogie zu den vorab beschriebenen Figuren statt. In diesem Beispiel sollen drei Verriegelungsbereiche 38,39,40 gegeben sein, wobei die Anzahl der Verriegelungsbereiche 38 bis 40 von der Höhe des Fahrzeugaufbaus abhängig ist. Die Türflügel 34,35 sind mit den Elementen 11 bzw. 11' und 14 bzw. 14' versehen, wobei in dieser Figur nur die Elemente 11',14' angesprochen sind. Selbige sind in allen Verriegelungsbereichen 38 bis 40 vorhanden, jedoch der besseren Übersicht halber lediglich für die Verriegelungsbereiche 38 und 39 dargestellt. Die Verriegelungselemente 14' sind an oberen und unteren Rahmenteilen 37',37" befestigt. Im Verriegelungsbereich 40 ist das ebenfalls bereits beschriebene Handeingriffselement 23 vorgesehen. Durch Anheben des Elementes 11' in vertikaler Richtung wird eine Entriegelung der Verriegelungselemente 14' bewirkt, so dass die Türflügel 34,35 im Öffnungssinne nach außen geschwenkt werden können. Ist das Be- oder Entladen beendet, werden die Türflügel 34,35 wieder im Schließsinne geschwenkt und das Element 11' über eine im unteren Verriegelungsbereich 40 vorgesehene Griffschale 23', in die Türflügel 34,35 gegenüber dem Rahmen 37 festlegender Weise, verriegelt.

### Bezugszeichenliste

- 1: Nutzfahrzeugaufbau
- 2: Scharnier
- 3: Rahmen
- 4: Bordwand (schwenkbares Bauteil)
- 5: Einrichtung
- 6: Einrichtung
- 7: Eckrunge
- 8: Mittelrunge (Halteelement)
- 9: Bordwandeinfassung
- 10: Bordwandprofil
- 11: Verschlusselement
- 11: Verschlusselement
- 12: Bordwandbereich (Halteelement)
- 13: Bordwandbereich (schwenkbares Bauteil)
- 14: Verriegelungselement
- 14': Verriegelungselement
- 15: Führung
- 15`: Führung
- 15": Ansatz Verschlusselement
- 16: Gegenprofil
- 17: Ausschnitt
- 18: Bereich
- 19: Profilkörper
- 20: Hubbegrenzungselement
- 21: Ansatz
- 22: Gegenprofil
- 23: Handeingriffselement
- 23': Griffschale
- 24: Abdeckelement
- 25: Kniehebel
- 26: erstes Kniehebelglied
- 27: Drehachse
- 28: Handhebel
- 29: zweites Kniehebelglied
- 30: Ausschnitt
- 31: Ausschnitt
- 32: Flächenbereich
- 33: Hecktürbereich
- 34: Türflügel
- 35: Türflügel
- 36: Scharnier
- 37: Rahmen
- 37': oberes Rahmenteil
- 37": unteres Rahmenteil
- 38: Verriegelungsbereich
- 39: Verriegelungsbereich
- 40: Verriegelungsbereich

## Patentansprüche

1. Einrichtung zum lösbaren Festlegen eines gegenüber einem Halteelement (12) relativ bewegbaren Bauteiles eines Nutzfahrzeugaufbaus, insbesondere einer Bordwand eines Nutzfahrzeugaufbaus (1), wobei das Halteelement (12) im Festlegungsbereich des Bauteiles (13) am Halteelement (12) über ein Verriegelungselement (14) verfügt und bauteilseitig mindestens ein entsprechendes Gegenprofil (16,22,31,32) vorgesehen ist, welches durch vertikale Verschiebung eines mit dem Gegenprofil (16,22,31,32) in Wirkverbindung stehenden Verschlusselementes (11) in den Bereich des mit dem Verriegelungselement (14) versehenen Halteelementes (12) einbringbar sowie daraus entfernbar ist,
**dadurch gekennzeichnet, dass**
das Halteelement (12) durch einen Bordwandbereich des Nutzfahrzeugaufbaus (1) gebildet ist, dass das Verriegelungselement (14) im Eckbereich des Bordwandbereiches (12) vorgesehen ist und in Richtung eines gegenüber dem Bordwandbereich (12) relativ bewegbaren weiteren Bordwandbereiches (13) weist, wobei der freie Eckbereich des weiteren Bordwandbereiches (13) mit dem mit dem Verriegelungselement (14) verriegelbaren Gegenprofil (16) versehen ist.

2. Einrichtung zum lösbaren Festlegen eines gegenüber einem Halteelement (8) relativ bewegbaren als Bordwand ausgebildeten Bauteiles, eines Nutzfahrzeugaufbaus wobei das Halteelement (8) im Festlegungsbereich des Bauteiles (4) am Halteelement (8) über ein Verriegelungselement (14') verfügt und bauteilseitig mindestens ein entsprechendes Gegenprofil (16,22,31,32) vorgesehen ist, welches durch vertikale Verschiebung eines mit dem Gegenprofil (16,22,31,32) in Wirkverbindung stehenden Verschlusselementes (11') in den Bereich des mit dem Verriegelungselement (14') versehenen Halteelementes (8) einbringbar sowie daraus entfernbar ist,
**dadurch gekennzeichnet, dass**
das Halteelement (8) durch eine im Bereich des Nutzfahrzeugaufbaus (1) vorgesehene Runge (8) gebildet ist, die das in Richtung der schwenkbaren Bordwand (4) weisende Verriegelungselement (14') aufnimmt, wobei in dem dem Verriegelungselement (14') gegenüberliegenden Bereich der Bordwand (4) das Gegenprofil (22) sowie das Verschlusselement (11) vorgesehen sind.

3. Einrichtung nach einem der Ansprüche 1 oder 2, **dadurch gekennzeichnet, dass** das Verschlusselement (11, 11') einstückig mit dem Gegenprofil (16,22) ausgebildet ist.

4. Einrichtung nach einem der Ansprüche 2 oder 3, **dadurch gekennzeichnet, dass** das Verschlusselement (11') im Bereich einer Bordwandeinfassung (9) oder eines damit in Wirkverbindung stehenden Profilkörpers (19), zum lösbaren Festlegen des relativ bewegbaren Bauteiles (4) parallel zur Bordwandeinfassung (9) innerhalb mindestens einer dort vorgesehenen Führung (15') verschiebbar ist.

5. Einrichtung nach einem der Ansprüche 1 bis 4, **dadurch gekennzeichnet, dass** das Verschlusselement (11, 11') über ein Handeingriffselement (23) verfügt, über welches eine manuelle Verschiebung des Verschlusselementes (11,11') in das Bauteil (4,13) in festlegender oder lösender Weise herbeiführbar ist.

6. Einrichtung nach einem der Ansprüche 1 bis 5, **dadurch gekennzeichnet, dass** die Betätigung des Verschlusselementes (11') über einen Kniehebel (25) erfolgt, dessen eines Kniehebelglied (26) um eine Achse (27) schwenkbar im Bereich des Bauteiles, insbesondere des Bordwandbereiches (13) oder der Bordwandeinfassung (9), vorgesehen ist und dessen anderes Kniehebelglied (29) am bewegbaren Verschlusselement (11') bzw. am Gegenprofil (22), angelenkt ist.

7. Einrichtung nach einem der Ansprüche 1 bis 6, **dadurch gekennzeichnet, dass** das Verschlusselement (11,11') als Hohlprofil ausgebildet ist, wobei zumindest die im festgelegten Zustand des Bauteiles (4,13) nach oben weisende Stirnseite des Verschlusselementes (11,11') mit einem Abdeckelement (24) versehen ist.

8. Einrichtung nach einem der Ansprüche 1 bis 7, **dadurch gekennzeichnet, dass** das Verriegelungselement (14,14') im Querschnitt C-, Z- oder hutförmig ausgebildet und mit dem Halteelement (8,12), insbesondere durch Schrauben oder Nieten, verbunden ist.

9. Einrichtung nach einem der Ansprüche 1 bis 8, **dadurch gekennzeichnet, dass** das Verschlusselement (11,11') aus einem Aluminium-Strangpressprofil oder einem Kunststoff-Spritzgussprofil gebildet ist.

10. Einrichtung nach einem der Ansprüche 1 bis 9, **dadurch gekennzeichnet, dass** profilkörperseitig ein Hubbegrenzungselement (20) für das Verschlusselement (11,11') vorgesehen ist.

## Claims

1. Device for releasably fastening a component of a utility vehicle structure, in particular a tailboard of a utility vehicle structure, which component can move relative to a support element (12), wherein the support element (12) has a locking element (14) in the region where the component (13) is fastened to the support element (12), and provided on the component is at least one corresponding counter-profile (16, 22, 31, 32) which, by vertical displacement of a closure element (11) actively connected to the counter-profile (16, 22, 31, 32), can be brought into and removed from the region of the support element (12) provided with the locking element (14), **characterised in that** the support element (12) is formed by a tailboard region of the utility vehicle structure (1), **in that** the locking element (14) is provided in the corner region of the tailboard region (12) and points in the direction of a further tailboard region (13) which can move relative to the tailboard region (12), wherein the free corner region of the further tailboard region (13) is provided with the counter-profile (16) which can be locked by the locking element (14).

2. Device for releasably fastening a component of a utility vehicle structure, which component is designed as a tailboard which can move relative to a support element (8), wherein the support element (8) has a locking element (14') in the region where the component (4) is fastened to the support element (8), and provided on the component is at least one corresponding counter-profile (16, 22, 31, 32) which, by vertical displacement of a closure element (11') actively connected to the counter-profile (16, 22, 31, 32), can be brought into and removed from the region of the support element (8) provided with the locking element (14'), **characterised in that** the support element (8) is formed by a stanchion (8) provided in the region of the utility vehicle structure (1), which stanchion receives the locking element (14') pointing in the direction of the pivotable tailboard (4), wherein the counter-profile (22) and the closure element (11) are provided in the region of the tailboard (4) opposite the locking element (14').

3. Device according to one of claims 1 or 2, **characterised in that** the closure element (11, 11') is formed in one piece with the counter-profile (16, 22).

4. Device according to one of claims 2 or 3, **characterised in that** the closure element (11'), in the region of a tailboard edge (9) or a profiled body (19) actively connected thereto, in order to releasably fasten the component (4) which is capable of relative movement, can be displaced parallel to the tailboard edge (9) within at least one guide (15') provided there.

5. Device according to one of claims 1 to 4, **characterised in that** the closure element (11, 11') has a hand engagement element (23), via which a manual displacement of the closure element (11, 11') in the component (4, 13) such as to bring about fastening or release is possible.

6. Device according to one of claims 1 to 5, **characterised in that** the actuation of the closure element (11') takes place via a toggle lever (25), one toggle lever element (26) of which is provided such that it can pivot about an axis (27) in the region of the component, in particular the tailboard region (13) or the tailboard edge (9), and the other toggle lever element (29) of which is articulated on the movable closure element (11') or on the counter-profile (22).

7. Device according to one of claims 1 to 6, **characterised in that** the closure element (11, 11') is configured as a hollow profile, wherein at least the end side of the closure element (11, 11') which points upwards in the fastened state of the component (4, 13) is provided with a covering element (24).

8. Device according to one of claims 1 to 7, **characterised in that** the locking element (14, 14') is C-shaped, Z-shaped or hat-shaped in cross-section and is connected to the support element (8, 12), in particular by screws or rivets.

9. Device according to one of claims 1 to 8, **characterised in that** the closure element (11, 11') is formed of an extruded aluminium profile or an injection-moulded plastic profile.

10. Device according to one of claims 1 to 9, **characterised in that** a travel limiting element (20) for the closure element (11, 11') is provided on the profiled body.

## Revendications

1. Dispositif de verrouillage réversible pour un composant de carrosserie d'un véhicule utilitaire mobile relativement à une structure de support (12), notamment un hayon de carrosserie de véhicule utilitaire (1), la structure de support (12) disposant, dans la zone de fixation du composant (13) à la structure de support (12) d'un élément de verrouillage (14) et d'au moins un contre-profil (16, 22, 31, 32) du côté du composant, qui peut y être introduit et en être désengagé dans la zone de la structure de support (12) pourvue de l'élément de verrouillage (14), par coulissement vertical d'un élément de fermeture (11) en liaison active avec le contre-profil (16, 22, 31, 32),
**caractérisé en ce que**
la structure de support (12) est formée par une zone du hayon de carrosserie de véhicule utilitaire (1), que l'élément de verrouillage (14) est prévu dans la zone arrière de la zone du hayon (12) et est dirigé vers une autre zone de hayon (13) mobile par rapport à la zone de hayon (12), la zone arrière libre de l'autre zone de hayon (13) étant pourvue du contre-profil (16) verrouillable au moyen de l'élément de verrouillage (14).

2. Dispositif de verrouillage réversible pour un composant de carrosserie d'un véhicule utilitaire, réalisé comme hayon, mobile relativement à une structure de support (8), la structure de support (8) disposant, dans la zone de verrouillage du composant (4) sur la structure de support (8) d'un élément de verrouillage (14') et au moins un contre-profil correspondant (16, 22, 31, 32) étant prévu du côté du composant, qui peut y être introduit et en être désengagé dans la zone de la structure de support (8) pourvue de l'élément de verrouillage (14'), par coulissement vertical d'un élément de fermeture (11') en liaison active avec le contre-profil (16, 22, 31, 32),
**caractérisé en ce que**
la structure de support (8) est formée par une contrefiche (8) dans la zone de carrosserie de véhicule utilitaire (1) qui reçoit l'élément de verrouillage (14') dirigé vers le hayon pivotant (4), le contre-profil (22) ainsi que l'élément de fermeture (11) étant prévus dans la zone du hayon (4) située à l'opposé de l'élément de verrouillage (14').

3. Dispositif selon l'une des revendications 1 ou 2, **caractérisé en ce que** l'élément de fermeture (11, 11') est formé d'une seule pièce avec le contre-profil (16, 22).

4. Dispositif selon l'une des revendications 2 ou 3, **caractérisé en ce que** l'élément de fermeture (11') peut coulisser, dans la zone d'une bordure du hayon (9) ou d'un corps profilé (19) en liaison active avec celui-ci, pour verrouiller de façon réversible le composant (4) mobile relativement, parallèlement à la bordure du hayon (9) dans au moins un guidage (15') qui y est prévu.

5. Dispositif selon l'une des revendications 1 à 4, **caractérisé en ce que** l'élément de fermeture (11, 11') dispose d'un élément de prise pour manipulation (23) au moyen duquel un coulissement manuel de l'élément de fermeture (11, 11') dans le composant (4, 13) peut être effectué dans le sens du verrouillage ou celui du déverrouillage.

6. Dispositif selon l'une des revendications 1 à 5, **caractérisé en ce que** l'actionnement de l'élément de fermeture (11') se fait par l'intermédiaire d'une genouillère (26), dont un premier élément (26) est prévu pivotant autour d'un axe (27) dans la zone du composant, notamment la zone du hayon (13) ou de la bordure du hayon et dont l'autre élément (29) est articulé sur l'élément de fermeture (11') mobile ou sur le contre-profil (22).

7. Dispositif selon l'une des revendications 1 à 6, **caractérisé en ce que** l'élément de fermeture (11, 11') est formé par un profilé creux, au moins la face frontale de l'élément de fermeture (11, 11'), qui à l'état verrouillé est dirigée vers le haut, est pourvue d'un élément de recouvrement.

8. Dispositif selon l'une des revendications 1 à 7, **caractérisé en ce que** l'élément de verrouillage (14, 14') est configuré avec une section en C, en Z ou en forme de toit et est relié à la structure de support (8, 12) principalement au moyen de vis.

9. Dispositif selon l'une des revendications 1 à 8, **caractérisé en ce que** l'élément de fermeture (11, 11') est formé par un profilé extrudé en aluminium ou un profilé en matière plastique moulé par injection.

10. Dispositif selon l'une des revendications 1 à 9, **caractérisé en ce qu'**un élément de limitation du levage (20) est prévu pour l'élément de fermeture (11, 11') du côté du corps profilé.
